# EUROPEAN PATENT SPECIFICATION

(11) **EP 3 166 414 B1**
(45) Date of publication and mention of the grant of the patent: **10.01.2018**
(21) Application number: 15732700.8
(22) Date of filing: 30.06.2015
(51) Int. Cl.: A23D 7/005, A23D 7/00

(54) **POURABLE OIL-IN-WATER COOKING COMPOSITION**
FLIESSFÄHIGE ÖL-IN-WASSER-KOCHZUSAMMENSETZUNG
COMPOSITION FLUIDE HUILE DANS L'EAU POUR LA CUISSON

(30) Priority: 11.07.2014 EP 14176778
(43) Date of publication of application: 17.05.2017
(73) Proprietor: Unilever NV, 3013 AL Rotterdam (NL); Unilever PLC, London, Greater London EC4Y 0DY (GB); Unilever BCS Europe B.V., 3013 AL Rotterdam (NL); Unilever BCS Limited, London, EC4Y 0DY (GB)
(72) Inventor: HOGERVORST, Wim Theodorus, 3133 AT Vlaardingen (NL); VERDUYN, Alexander, 3133 AT Vlaardingen (NL); WIERSMA, Jonna Aleide, 3133 AT Vlaardingen (NL)
(74) Representative: Wurfbain, Gilles L.
(86) International application number: PCT/EP2015/064829
(87) International publication number: WO 2016/005230

(56) References cited:
- EP-A1- 2 183 977
- WO-A1-01/35756
- WO-A1-2011/144405
- GB-A- 2 474 937
- US-A- 6 139 897
- US-B1- 6 423 363

## Description

### Field of the invention

The present invention is directed to edible pourable oil-in-water cooking compositions suitable for shallow frying. The invention is further directed to a method for making such compositions and to their use. These products are characterized by having improved foaming behavior and viscosity.

### Background of the invention

Food compositions suitable for shallow frying are well-known. Examples of such food compositions are butter, (liquid) margarine, and cooking milk. A pourable water and oil containing emulsion comprising anti-spattering agents, emulsifiers, browning agents, salt and fat is disclosed in WO 01/35756.

In particular cooking milk, which is an edible oil-in-water pourable cooking composition, is well appreciated by consumers as perceived to be more healthy (e.g. less fatty to the touch and other senses) than for example pourable water-in-oil margarines. Pourable oil-in-water emulsions are characterized by having a continuous water-phase and a dispersed oil-phase, generally in the form of oil droplets. The pourability of such compositions is typically evidenced by a Bostwick value of at least 6 at 20 degrees Celsius.

The general process for the manufacture of pourable oil-in-water cooking compositions encompasses the following steps:
1. Providing a water-phase;
2. Providing a fat-phase;
3. Mixing to provide a pourable oil-in-water emulsion.
These steps are usually conducted in a process that involves apparatus that allow heating (e.g. to dissolve emulsifiers and any other ingredients), cooling and mechanical working of the ingredients.

Although pourable oil-in-water cooking compositions have a continuous water-phase, a relatively large fat phase (e.g. in the form of oil-droplets) is often present to allow suitable frying of food products. For frying food products, the consumer typically places food product in the pan comprising heated frying medium at a temperature above 100 degrees Celsius, such as 160-170 degrees Celsius (i.e. above the typical boiling point of water at ambient conditions). At such conditions any water quickly evaporates typically under formation of some foaming, leaving the fat-phase. Once the water is boiled-off (e.g. also as initially present in the emulsion), the foam typically also disappears rather quickly (if any was formed at all). Consumers consider it desirable that foam develops during the initial boiling-off of the water-phase during heating of the frying medium, but also when later a water-containing food-product is placed in the heated frying medium. Typically when later a water-containing food product is placed in the heated frying medium again some foaming may occur. The formation of foam, which also remains visible for some time after formation (i.e. which does not quickly disappear again) is perceived as healthy, since it imparts an aerated nature to the frying medium during heating and the frying of water-containing food products.

However, in prior art pourable oil-in-water compositions which are suitable for frying it was observed that the amount of foam which develops can be small and also that the foam which develops (if any) also disappears rather quickly. Therefore there is a desire for a pourable oil-in-water composition, which develops a large amount of foam during heating of the frying medium and/or when the heated frying medium comes into contact with a water-containing food product; and also wherein the foam has improved stability (e.g. does not disappear quickly once formed). In particular it is desirable that the foam which develops covers a large surface area of the frying medium, has improved volume (e.g. thickness of the foam layer) and has improved persistence in time. This cue for the aeration of the frying medium is in particular desirable when frying (water-containing) products which are high in fats and cholesterol and are perceived as unhealthy, such as eggs.

Furthermore, it was observed that the viscosity of pourable oil-in-water cooking products comprising a large dispersed fat-phase can be less than desirable, especially when used directly from the fridge (e.g. when the emulsion itself still has a relatively low temperature, such as 5 degrees Celsius, which is a typical fridge storage temperature). In particular, when applying the pourable oil-in-water cooking composition to a frying pan it is desired that the product quickly spreads-out to cover a large surface area. This reduces the need for the consumer to manually manipulate the pan (e.g. by swirling) to sufficiently spread the pourable frying medium. Furthermore, a faster spreading-out of the pourable frying medium will lead to more efficient heating of the cooking product as a larger surface area is in contact with the heated (frying pan) surface.

The physical storage stability of pourable products is another important characteristic. For example pourable oil-in-water compositions may show undesirable formation of an oil layer on top of the emulsion after storage at temperatures between 5 and 25 degrees Celsius. The formation of such an oil layer is referred to as oil separation.

A further problem encountered when addressing such problems is that preferably the pourable oil-in-water compositions should have a short ingredient list. Furthermore, additives other than oil, water and common flavors (e.g. salt) which are not perceived to contribute to the health of the consumer are less desirable. The presence of such additives can reduce the healthy-perception of the frying composition and lead to reduced consumer acceptance. Indeed more preferably, the additives other than oil, water and common flavors (e.g. salt) have an appreciable positive (perceived) influence on consumer health.

It is an object of the present invention to provide stable pourable oil-in-water cooking composition which has improved foaming behavior, in particular an increased amount of foaming and a more stable foam (e.g. the time the foam (layer) is maintained once formed), during heating of the product and/or during frying of a water-containing food product.

It is further object of the present invention to provide stable pourable oil-in-water composition suitable for shallow frying which has a reduced viscosity, preferably at relatively low temperatures such as 5 degrees Celsius.

It is a further object of the present invention to provide stable pourable oil-in-water composition suitable for shallow frying which has improved foaming behavior, a reduced viscosity; and wherein the one or more additives which affect these characteristics have a generally (perceived) positive contribution to consumer health.

### Summary of the invention

It was found that one or more of these objectives are achieved by an edible pourable oil-in-water emulsion suitable for shallow frying comprising:
- 40 to 90 wt. % liquid oil;
- 5 to 55 wt. % of water;
- 1 to 20 wt. % of plant sterol esters;
- 0.05 to 5 wt. % of salt;
- 0.01 to 3 wt. % of oil-in-water promoting emulsifier.

It was surprisingly found that adding plant sterol esters according to the invention to a pourable oil-in-water (high-fat) emulsion reduces its viscosity, when measured at typical storage temperatures such as 5 degrees Celsius. This is the more surprising since (part of) the sterol esters solidify in (micro)particulate form in the pourable composition when stored at typical fridge temperatures, such as 5 degrees Celsius. Addition of plant sterol esters to a pourable oil-in-water emulsion would therefore be expected to increase viscosity rather than reduce it, as was surprisingly found in the present invention.

The improvement in viscosity reduction of pourable oil-in-water emulsion at 5 degrees Celsius according to the invention is particularly apparent compared to
- similar pourable oil-in-water emulsions, but without added plant sterol esters, or
- pourable water-in-oil emulsions with added plant sterol esters (which have an general similar composition, but which typically have water-in-oil promoting emulsifiers).

Furthermore, it was found that the addition of the plant sterol esters improves the amount of foam which forms when water is boiled-off (e.g. during initial heating or when a water-containing food product is added) and improves its stability (e.g. increases the time a foam (layer) is maintained). Surprisingly the improved foaming behavior was even more apparent (compared to similar pourable oil-in-water emulsions without added sterol esters) in case of frying high-fat and high-cholesterol products such as eggs.

Thus in a further aspect the invention relates to the use of plant sterol esters to reduce viscosity of pourable oil-in-water emulsions and/or to improve foaming behavior.

In a further aspect the invention relates to a process for manufacture of edible pourable oil-in-water emulsions according to the invention.

### Detailed description

Weight percentage (wt. %) is based on the total weight of the product unless otherwise stated. It will be appreciated that the total weight amount of ingredients will not exceed 100 wt. % based on total weight of the product.

The terms 'fat' and 'oil' are used interchangeably. Where applicable the prefix 'liquid' or 'solid' is added to indicate if the fat or oil is liquid or solid at ambient temperature as understood by the person skilled in the art. Ambient temperature is considered to be a temperature of about 20 degrees Celsius. Hardstock fat refers to a fat that is solid at ambient temperature as understood by the person skilled in the art. The terms 'hardstock fat', 'structuring fat' or 'hardstock' are used interchangeably. The terms 'liquid hardstock fat' and 'hardstock fat in liquid form' are used interchangeably.

The pourable oil-in-water emulsions according to the invention have a Bostwick value of at least 6 at 20 degrees Celsius and preferably of at least 9.

Fat as used in the present invention refers to edible triglyceride based fat as understood by the person skilled in the art. The terms 'triacylglycerols', 'TAGs', and 'triglycerides' are used interchangeably; they refer to esters of glycerol and three fatty acids. The fatty acid (moieties) of the TAGs may vary in length. The length of a fatty acid is commonly indicated by their carbon number. The fatty acid (moieties) may be saturated, monounsaturated or polyunsaturated.

Pourable (stable) oil-in-water emulsion according to the invention preferably show oil separation of less than 7 vol. %, more preferred less than 5 vol. %, on total product after storage at 20 degrees Celsius for 4 weeks.

### Plant sterol esters

Plant sterol esters (also known as phyto sterol esters) can be classified in three groups, 4-desmethylsterols, 4-monomethylsterols and 4,4'-dimethylsterols. In oils they mainly exist as free sterols and sterol esters of fatty acids although sterol glucosides and acylated sterol glucosides are also present. There are three major phyto sterolsesters namely esters of beta-sitosterol, stigmasterol and campesterol. Schematic drawings of the components meant are as given in "Influence of Processing on Sterols of Edible Vegetable Oils", S.P. Kochhar; Prog. Lipid Res. 22: pp. 161-188. The respective esters of 5 alpha- saturated derivatives such as sitostanol, campestanol and ergostanol are also encompassed in the term plant sterol ester.

Preferably the emulsion according to the invention comprises from 5 to 18 wt. %, more preferably 9 to 16 wt. % and even more preferably from 10 to 14 wt. % of plant sterol esters.

Preferably the plant sterol ester is selected from the group comprising esters of β-sitosterol, β-sitostanol, campesterol, campestanol, stigmasterol, brassicasterol, brassicastanol or a mixture thereof and more preferably is selected from the groups comprising esters of β-sitosterol, campesterol, stigmasterol, brassicasterol. Suitable sources of plant sterol esters are for example derived from soy bean oil, tall oil, rapeseed oil or combinations of these oils.

Preferably the source of plant sterol esters used in the emulsion according to the invention comprises from 30 to 90 wt. % of sitosterol, from 0 to 40 wt. % of campesterol, from 0 to 40 wt. % of stigmasterol, from 0 to 20 wt. % of brassica sterol or a combination thereof. More preferably the source of plant sterol esters used in the emulsion according to the invention comprises from 30 to 90 wt. % of sitosterol, from 0 to 40 wt. % of campesterol, from 0 to 40 wt. % of stigmasterol and from 0 to 20 wt. % of brassica sterol. Such plant sterols are commercially available, for example from BASF, under the tradename Generolester NG Deso.

Phytosterols (both free and esterified) have a demonstrated blood cholesterol lowering effect and have been proposed as therapeutic agents for hypercholesterolemia. It has been shown frequently now that when plant sterol esters are added to food products they have a beneficial effect of cholesterol levels in particular LDL cholesterol (Weststrate J.A. and Meijer G.W. Eur. J. clin. Nutr. 52 (1998) 334-343.

Free (i.e. non-esterified) plant sterols may be present in the emulsion according to the invention. The emulsion according to the invention preferably comprises from 1 to 15 wt. %, more preferably from 3 to 10 wt. % and even more preferably from 5 to 9 wt. % of free plant sterols, based on total weight of plant sterol esters and free sterols. The presence of free plant sterols in the composition according to the invention improves foaming behavior (e.g. amount and maintenance of foam in time) and further reduces viscosity.

### Liquid oil

The liquid oil according to the invention may be single oil or a mixture of different oils. Preferably at least 50 wt. % of the liquid oil, based on total amount of liquid oil, more preferably at least 70 wt. %, even more preferably at least 80 wt. % and still even more preferably essentially all the liquid oil; is oil of vegetable origin. The liquid oil fraction preferably comprises unmodified vegetable oil such as soybean oil, sunflower oil, linseed oil, low erucic rapeseed oil (Canola), corn oil (maize oil), olive oil, algae oil and blends of vegetable oils. For the purpose of this invention algae oil is considered vegetable oil.

Preferably the liquid oil according to the invention comprises less than 2 wt. %, more preferably less than 1.5 wt. %, even more preferably less than 1.0 wt. % and still even more preferably less than 0.5 wt. % of *trans* FA's based on the total weight of the liquid oil.

Preferably the emulsion according to the invention comprises from 50 to 85 wt. %, and more preferably from 65 to 80 wt. % of liquid oil.

### Water

Preferably the emulsion according to the invention comprises from 10 to 40 wt. %, and more preferably from 15 to 30 wt. % of water. Preferably the pH of the water-phase is 4.0 to 6.5, more preferably form 4.4 to 6.0, even more preferably from 4.5 to 5.5 and still even more preferably from 4.6 to 5.0. Such pH is obtainable for example by addition of an edible acid. Suitable acids include lactic acid, citric acid hydrochloric acid the preferred acid is citric acid.

### Salt

The emulsion according to the invention comprises 0.05 to 5 wt. % salt. The salt can be any food grade salt. Preferably the salt comprises sodium chloride, potassium chloride, calcium chloride or combinations thereof and more preferably the salt essentially consists of potassium chloride.

Preferably the emulsion according to the invention comprises from 0.1 to 4 wt. %, more preferably from 0.2 to 3 wt. %, even more preferably from 0.3 to 2 wt. % and still even more preferably from 0.4 to 1.5 wt. % of salt. To assess the amount of salt in the composition according to the invention account is taken only of mineral salts (e.g. sodium chloride and potassium chloride, but not hydrocarbon salts, such as salts of citrate).

### Oil-in-water promoting emulsifier

Oil-in-water promoting emulsifiers are known in the art. Typically fat soluble emulsifiers are used to in the manufacture of water-in-oil emulsions, whereas water soluble emulsifiers are typically used to improve the stability of oil-in-water emulsions, such as dressings. The Hydrophilic-Lipophilic Balance (HLB) of an emulsifier is a measure of the degree to which it is hydrophilic or lipophilic. The HLB value is a parameter which is describing the solubility of the surfactant. The HLB value is a concept introduced by Griffin in 1950 as a measure of the hydrophilicity or lipophilicity of nonionic surfactants. It can be determined experimentally by the phenol titration method of Marszall; see "Parfumerie, Kosmetik", Vol. 60, 1979, pp. 444-448; and Rompp, Chemistry Lexicon, 8th Edition 1983, p. 1750. An emulsifier having an HLB value of 8 or lower is usually classified as being a water-in-oil promoting emulsifier and as fat soluble. Emulsifiers with an HLB of more than 8 are usually considered oil-in-water promoting.

The amount of oil-in-water promoting emulsifier may depend on the type used and the other ingredients present. The amount required is generally known by the skilled person or can be learned from the Supplier advise.

Preferably the emulsion according to the invention comprises from 0.05 to 2 wt. %, more preferably from 0.1 to 1.5 wt. % and even more preferably form 0.1 to 1.0 wt. % of oil-in-water promoting emulsifier.

Polysorbates are a class of known emulsifiers which are used in some food preparations to provide oil-in-water emulsions. Polysorbates are typically oily liquids derived from PEG-ylated sorbitan esterified with fatty acids. Polysorbates are commercially available, such as under brands names Alkest, Canarcel and Tween.

Preferably the oil-in-water promoting emulsifier according the invention comprises polysorbate-60 and more preferably essentially is polysorbate-60. Polysorbate-60 is commercially available, for example from Sigma-Aldrich. Polysorbate-60 is generally considered a strong oil-in-water promoting emulsifier.

### Lecithin

Lecithin is a collective name of products which consist of a few well-defined substances and many more or less well-defined substances in varying amounts. Common non-purified lecithin (crude lecithin) typically consists of about one half or more of phospholipids. Other substances present in crude lecithin are fats (typically about 35 wt. %), free fatty acids, glycolipids, tocopherols, sterols and carbohydrates. Most commercially available lecithins are prepared on the basis of soybeans, but lecithin is also found inter alia in animal sources, such as yolk and other vegetable sources, such as in rapeseed and sunflower oil. Preferably the lecithin used in the process according to the invention is derived from a vegetable source, more preferably soybeans, sunflower seeds or rapeseed or any a combination thereof; and even more preferably from soybeans. Lecithin may be treated, such as by hydrogenation or hydrolysation, to alter the HLB-value.

It was surprisingly found that the presence of a some lecithin having a HLB of from 2 to 6 (in addition a sufficient amount of oil-in-water promoting emulsifier to provide an oil-in-water emulsion) further improved foaming behavior. Therefore, preferably the emulsion according to the invention further comprises (e.g. in addition to the oil-in-water promoting emulsifier such as polysorbate-60) from 0.1 to 1 wt. % of lecithin having a HLB of from 2 to 6 and more preferably having a HLB of from 3 to 5. Such lecithin is commercially available under the trade name Cetinol (Supplier: Sime Darby, Unimills).

### Optional ingredients

Optionally the pourable oil-in-water emulsion according to the invention may comprise further ingredients, such as vitamins, minerals, flavors, herbs and spices. However, the features of the invention as specified in claim 1 should be adhered to (e.g. from 0.05 to 5 wt. % of total salt).

### Process for manufacture

The edible pourable oil-in-water emulsions according to the invention can be manufactured using well established methods as known in the art. The process may simply involve combining all ingredients and mixing under sufficient shear and for a sufficient period of time to homogenize the ingredients and provide a pourable oil-in-water emulsion.

In a preferred process a water-phase and oil-phase are first separately prepared before being combined. Thus in a further aspect the present invention provides a process for the manufacture of the edible pourable oil-in-water emulsion according to the invention, comprising the steps:
a) providing a water-phase;
b) providing an oil-phase;
c) mixing the water-phase and the oil-phase to provide the edible pourable oil-in-water emulsion;
wherein the remaining ingredients are added at any of step a), b) or c); or in parts at any combination of said steps.

Preferably the water-phase is prepared by adding the salt and other water-soluble ingredients to the water. The water-phase may be subject to heating and/or mixing to suitably dissolve and homogenize the water-phase ingredients. Preferably the oil-phase is prepared by adding the oil-soluble ingredients to the liquid oil. The oil-phase may be subject to heating and/or mixing to suitably dissolve and homogenize the oil-phase ingredients. The oil-in-water promoting emulsifier may be added to either the water-phase or the oil-phase, but preferably to water-phase.

Plant sterol esters and free sterols have low solubility in oil and water (at ambient temperature). Preferably the sterol esters and the optionally present free sterols are prepared (e.g. as pre-mix) by dissolving in part of the liquid oil, such as by applying sufficient heating (e.g. to 70 degrees Celsius) to dissolve; and subsequently added at at any of step a), b) or c); or in parts at any combination of said steps. Heating only part of the liquid oil to dissolve the sterol esters and the optionally present free sterols reduces energy requirement compared to heating the whole of the oil - and/or water-phase.

The preferably prepared pre-mix of the sterols may be added to the water-phase and/or the oil-phase preferably under sufficient shear. The temperature of the water-phase and/or oil-phase is preferably below the crystallization point of the sterols as to allow crystallization under shear, which improves dispersion of the sterol esters and the optionally present free sterols.

Finally the water-phase and oil-phase are combined, typically by mixing in a high shear mixer to provide the edible pourable oil-in-water emulsion according to the invention. The mixing may be performed batch wise or in a continuous manner. Suitable mixing devices are known in the art, such as steered vessels equipped with an Ultra-turrax, pin-stirrer and fluid dynamic mixers.

The mixing in step c) is preferably performed to provide an edible pourable oil-in-water emulsion wherein the dispersed oil phase has a volume weighted geometric mean diameter D4,3 of at most 50 micrometer, more preferably of at most 25 and even more preferably from 10 to 22. Said droplet size is as measured directly after production of the pourable oil-in-water emulsions.

The oil-droplet size in the emulsion according to the invention can be measured using the Coulter principle (also known as the Coulter-counter method) using an electrical sensing zone. Low concentration particles suspended in electrolyte can be counted by passing them through the Counter-counter aperture. A volume of electrolyte equivalent to the immersed volume of the particle is displaced from the sensing zone. This resistance change can be measured as a voltage pulse or a current pulse. The voltage pulse is proportional to the volume of the sensed particle. Using counter and pulse analyzer circuits, the number and volume of the oil-droplets passing through the sensing zone can be measured. The volume may be represented as the equivalent spherical diameter and is expressed as D4,3. The measured particle sizes can be channelized using a height analyzer circuit and a particle size distribution obtained. The electrical response of the instrument is essentially independent of the shape of the oil droplets. Color or refractive index of the oil droplets is generally considered not to affect the results. The Counter-counter used to measure the oil-droplets according to the invention is of a type Multisizer 3 (supplier Beckman-Coulter).

The mean diameter of the oil-phase droplets can for example be affected by applying sufficient time and/or mixing intensity during the mixing step c).

### Use of the plant sterol esters

The edible pourable oil-in-water emulsions according to the invention comprising plant sterol esters, show improved foaming behavior and viscosity (e.g. at 5 degrees Celsius) compared to similar (e.g. in terms of ingredient listing) pourable oil-in-water emulsions without added plant sterol esters. Therefore the invention also relates to the use of plant sterol esters in a pourable oil-in-water emulsion to reduce viscosity; to improve foaming behavior or a combination thereof. Preferably the use to improve foaming behavior relates to increasing the amount of foam during frying, increasing the time a foam (layer) is maintained (e.g. remains appreciably visible) during the initial heating, frying of water-containing food products or a combination thereof.

Preferably the pourable oil-in-water emulsion according to the invention has a viscosity as measured at 5 degrees Celsius and in accordance with the Brookfield measuring technique as described herein, which is at least 5 mPa s, more preferably 10 mPa s, even more preferably 20 mPa s and still even more preferably 50 mPa s lower then a pourable oil-in-water composition having a similar composition, but wherein the sterols (esterified and/or free) have been replaced by a corresponding amount of liquid oil).

Some lower limit to viscosity of the oil-in-water emulsion according to the invention is desirable to have more controlled pouring of the composition when desiring to apply a certain amount e.g. to a frying pan. On the other hand, as explained a low viscosity is desirable to provide good spreading-out of the emulsion even when still at relatively low (e.g. refrigeration) temperatures. Therefore preferably the pourable oil-in-water emulsion according to the invention has a viscosity as measured at 5 degrees Celsius and in accordance with the Brookfield measuring technique as described herein, of at least 300 mPa·s, more preferably at least 500 mPa·s.

Preferred aspects of the invention disclosed herein in the context of one aspect of the invention (e.g. preferred levels of water in the emulsion) are also applicable to the other aspect(s) as well, *mutatis mutandis* (e.g. preferred levels of water used in the manufacture process to provide the emulsion).

The invention is now illustrated by the following non limiting examples.

### Examples

### Viscosity

The viscosity was determined with a Brookfield viscometer (Type: DV-II Pro; Supplier: Brookfield) suitable for making viscosity measurements of a 600 ml beaker, using a spindle-type 4. The spindle was attached to the lower shaft of the viscometer. Next the spindle was lowered in the emulsion until the fluid level reached the immersion groove on the shaft of the spindle. The viscosity was measured of the emulsion having a temperature of 5 degrees Celsius with the viscometer operating at 100 rpm.

### Pourability

Pourability is measured according to the standard Bostwick protocol. The Bostwick equipment consists of a 125 ml reservoir provided with an outlet near the bottom of a horizontally placed rectangular tub and closed with a vertical barrier. The tub's bottom is provided with a 25 cm measuring scale, extending from the outlet of the reservoir. When equipment and sample both have a temperature of 5 degrees Celsius, the reservoir is filled with 125 ml of sample after it has been shaken by hand ten times up and down. When the closure of the reservoir is removed the sample flows from the reservoir and spreads over the tub bottom. The path length of the flow is measured after 30 seconds. The value, expressed as cm per 30 seconds is the Bostwick rating, which is used as yard stick for pourability.

The maximum value that can be determined with this measurement is 23.

### Determination of foaming

A sample of 25 g of product is place in a glass dish, which is heated using an electrical plate to about 165 degrees Celsius. Any foam formation (and the disappearance thereof) is observed and noted by eye during initial heating of the cooking product. After disappearance of the foam (if any formed during heating of the product) the emulsion is left for another 5 minutes at 165 degrees Celsius. Next 10 ml of cold water is added to the dish (to simulate addition of a water-containing food product) and foam formation in terms of amount and maintenance in time noted. Foam amount is then indicated by the maximum observed foam coverage (in % of the dish-surface), which value can range from 0 % to 100 %.

### Composition of emulsions

The pourable oil-in-water emulsion according to Example 1 and Comparative A, and the pourable water-in-oil emulsion according to Comparative B were made with a composition as set out in Table 1.

**Table 1. Composition of pourable cooking products of Example 1 and Comparatives A and B (numbers represent wt. %).**

| | Example 1 | Comp. A | Comp. B |
|---|---|---|---|
| Sunflower oil | 16 | 28 | - |
| Rapeseed oil | 23 | 23 | 72 |
| 30/70 Linseed/Sunflower oil | 22 | 22 | 8 |
| RP70 | - | - | 2.0 |
| ¹Sterol esters | 12 | - | 12 |
| Sodium chloride | 1.5 | 1.5 | - |
| Polysorbate 60 | 0.15 | 0.15 | - |
| ²Lecithin | 0.3 | 0.3 | 0.2 |
| ³Gum | 0.02 | 0.02 | - |
| ⁴Beta carotene (30%) | Trace | Trace | Trace |
| Citric acid | 0.09 | 0.09 | 0.25 |
| Potassium sorbate | 0.8 | 0.8 | - |
| ⁵NutriSoy | 0.1 | 0.1 | - |
| Water | Balance | Balance | Balance |

| | | | |
|---|---|---|---|
| ¹ sterol esters: Generolester NG Deso (a mixture of about 92.5 % sterolesters and about 7.5 wt. % of free sterols), Supplier: BASF. ² lecithin: Cetinol, Supplier: Sime Darby. ³ the gum used is a 50/50 mixture of xanthan gum and guar gum. ⁴ beta-carotene: added in 30 % oily suspension, Supplier: BASF. ⁵ NutriSoy:cholesterol-free soy protein ingredient rich in amino acid (NutriSoy type 7B, Supplier: Archer Daniels Midland Company). | | | |

### Production of Example 1 and Comparative A

Example 1 was made according to the following method: A pre-mix of the sterol esters was formed by mixing the sterol esters with part of the liquid oil in a ratio of 35:65 and heating to about 70 degrees Celsius to dissolve the sterol esters. The gums, NutriSoy and polysorbate were dissolved in the water by heating at 72 degrees Celsius for about 2 minutes to pasteurize. Next the salt, potassium sorbate and citric acid were added. The sterol ester pre-mix was added to said water-phase under shear. Finally, the remaining oil and other ingredients were combined with the water-phase under high-shear mixing conditions in a steered vessel (volume: 2 litre) using an Ultra-turrax operating at 3500 rpm. The pourable oil-in-water emulsion was allowed to cool to room temperature.

Comparative A was made according to the process described for Example 1, but without the addition of sterol esters.

Comparative B was made according to the process described for Example 1. The presence of only lecithin (i.e. and the absence of the strong oil-in-water promoting emulsifier Polysorbate-60) leads to a pourable water-in-oil emulsion.

### Results

After the emulsions of Example 1 (according to the invention) and of Comparatives A and B (not according to the invention) were made, they were analyzed for foaming behavior and viscosity (Table 2). The emulsions were measured right after production to determine viscosity. All emulsions were pourable as indicated by having a Bostwick value of more than 10. The emulsions were stable at 20 degrees Celsius (no separation of oil-, and water-phase) for at least 4 weeks. The D4,3 of the oil-droplets was below 22 for Example 1 and Comparative A.

A sample of the emulsions was heated as described above under 'Determination of Foaming'. During initial heating of the emulsions it was observed that Example 1 showed a greater amount of foam formation (in terms of % covered of the dish surface and in terms of thickness of the foam layer) and also the foam remained visible for a longer time period compared to Comparative A. Next after the foam in Example 1 and Comparative A had disappeared, 10 ml of cold water was added (as described) to compare foaming behavior in a more controlled manner (e.g. at a controlled emulsion temperature; see Table 2).

**Table 2: viscosity (at 5 degrees Celsius); and foaming behavior after addition of 10 ml of cold water.**

| | Example 1 | Comp. A | Comp. B |
|---|---|---|---|
| Viscosity (mPa s) | 1272 | 1904 | 1532 |
| Maximum Foam coverage | 80-100% | 20-40 % | n.a. |

| | | | |
|---|---|---|---|
| n.a.: not applicable | | | |

Clearly the results in Table 2 (and the other observations made) show that the addition of sterol esters to a pourable high-fat oil-in-water emulsion reduced the viscosity at relevant temperature of about 5 degrees Celsius (i.e. fridge storage temperature). This ensures that when the consumer takes the product from the fridge and applies it to the pan it has excellent spreading-out behavior. What is also shown is that adding sterol esters to a comparable pourable water-in-oil emulsion (e.g. having a comparable overall fat-level) does not lead to a comparable reduction in viscosity. The reduction in viscosity which was achieved with the pourable oil-in-water emulsion according to the invention was apparent compared to emulsion according to Comparative A (no added sterols) and Comparative B (added sterols, but a pourable water-in-oil emulsion).

Furthermore, the results in Table 2 show that when 10 ml of cold water is added to the heat-controlled emulsion according to the invention (Example 1) the foaming behavior is improved. In particular the maximum amount of foam formed greatly increases (Table 2). Furthermore it was observed that also the time foam remains visible is increased. Said improved foaming behavior was apparent when compared to emulsions according the Comparative A (no added sterols). Therefore the emulsion according to the invention successfully gives the consumer the impression that frying using the emulsion is more healthy.

## Claims

1. Edible pourable oil-in-water emulsion suitable for shallow frying comprising:
• 40 to 90 wt. % liquid oil;
• 5 to 55 wt. % of water;
• 1 to 20 wt. % of plant sterol esters;
• 0.05 to 5 wt. % of salt;
• 0.01 to 3 wt. % of oil-in-water promoting emulsifier.

2. Edible emulsion according to claim 1, comprising from 5 to 18 wt. %, preferably 9 to 16 wt. % and more preferably from 10 to 14 wt. % of plant sterol esters.

3. Edible emulsion according to claim 1 or claim 2, comprising from 1 to 15 wt. %, preferably from 3 to 10 wt. % and more preferably from 5 to 9 wt. % of free plant sterols, based on total weight of plant sterol esters and free sterols.

4. Edible emulsion according to any one of claims 1 to 3, comprising from 50 to 85 wt. % and preferably from 65 to 80 wt. % of liquid oil.

5. Edible emulsion according to any one of claims 1 to 4, comprising from 10 to 40 wt. % and preferably from 15 to 30 wt. % of water.

6. Edible emulsion according to any one of claims 1 to 5, comprising from 0.1 to 4 wt. %, preferably from 0.2 to 3 wt. %, more preferably from 0.3 to 2 wt. % and even more preferably from 0.4 to 1.5 wt. % of salt.

7. Edible emulsion according to any one of claims 1 to 6, comprising from 0.05 to 2 wt. %, preferably from 0.1 to 1.5 wt. % and more preferably form 0.1 to 1.0 wt. % of oil-in-water promoting emulsifier.

8. Edible emulsion according to any one of claims 1 to 7, wherein the oil-in-water promoting emulsifier comprises polysorbate-60 and preferably essentially is polysorbate-60.

9. Edible emulsion according to any one of claims 1 to 8, further comprising from 0.1 to 1 wt. % of lecithin having a HLB of from 2 to 6 and preferably having a HLB of from 3 to 5.

10. Edible emulsion according to any one of claims 1 to 9, wherein the emulsion
has a viscosity as measured at 5 degrees Celsius with a Brookfield Type DV-Pro viscosimeter supplied by Brookfield operating at 100 rpm, using a type 4 spindle, from 300 to 1800 mPa s, more preferably from 500 to 1700 mPa·s and even more preferably from 700 to 1500 mPa·s.

11. Process to manufacture the edible pourable oil-in-water emulsion according to any one of claim 1 to 10, comprising the steps:
a) providing a water-phase;
b) providing an oil-phase;
c) mixing the water-phase and the oil-phase to provide the edible pourable oil-in-water emulsion.
wherein the remaining ingredients are added at any of step a), b) or c); or in parts at any combination of said steps.

12. Process according to claim 11, wherein the plant sterol esters and the optionally present free sterols are prepared by dissolving in part of the liquid oil and subsequently added at at any of step a), b) or c); or in parts at any combination of said steps.

13. Process according to claim 11 or claim 12, wherein the dispersed oil phase has a volume weighted geometric mean diameter D4,3 of at most 50 micrometer, preferably of at most 25 and more preferably from 10 to 22.

14. Use of plant sterol esters in a pourable oil-in-water emulsion to reduce viscosity; to improve foaming behavior, preferably during frying or a combination thereof.

15. Use according to claim 14, wherein the use to improve foaming behavior relates to increasing the amount of foam during frying, increasing the time a foam layer is maintained during frying or a combination thereof.

## Patentansprüche

1. Essbare gießfähige Öl-in-Wasser-Emulsion, die zum Flachbraten geeignet ist, umfassend
• 40 bis 90 Gew.-% flüssiges Öl,
• 5 bis 55 Gew.-% Wasser,
• 1 bis 20 Gew.-% pflanzliche Sterolester,
• 0,05 bis 5 Gew.-% Salz,
• 0,01 bis 3 Gew.-% Öl-in-Wasser fördernden Emulgator.

2. Essbare Emulsion nach Anspruch 1, umfassend von 5 bis 18 Gew.-%, bevorzugt 9 bis 16 Gew.-% und bevorzugter von 10 bis 14 Gew.-% pflanzliche Sterolester.

3. Essbare Emulsion nach Anspruch 1 oder Anspruch 2, umfassend von 1 bis 15 Gew.-%, bevorzugt von 3 bis 10 Gew.-% und bevorzugter von 5 bis 9 Gew.-% freie pflanzliche Sterole, bezogen auf das Gesamtgewicht der pflanzlichen Sterolester und freien Sterole.

4. Essbare Emulsion nach irgendeinem der Ansprüche 1 bis 3, umfassend von 50 bis 85 Gew.-% und bevorzugt von 65 bis 80 Gew.-% flüssiges Öl.

5. Essbare Emulsion nach irgendeinem der Ansprüche 1 bis 4, umfassend von 10 bis 40 Gew.-% und bevorzugt von 15 bis 30 Gew.-% Wasser.

6. Essbare Emulsion nach irgendeinem der Ansprüche 1 bis 5, umfassend von 0,1 bis 4 Gew.-%, bevorzugt von 0,2 bis 3 Gew.-%, bevorzugter von 0,3 bis 2 Gew.-% und sogar bevorzugter von 0,4 bis 1,5 Gew.-% Salz.

7. Essbare Emulsion nach irgendeinem der Ansprüche 1 bis 6, umfassend von 0,05 bis 2 Gew.-%, bevorzugt von 0,1 bis 1,5 Gew.-% und bevorzugter von 0,1 bis 1,0 Gew.-% Öl-in-Wasser fördernden Emulgator.

8. Essbare Emulsion nach irgendeinem der Ansprüche 1 bis 7, wobei der Öl-in-Wasser fördernde Emulgator Polysorbat-60 umfasst und bevorzugt im Wesentlichen Polysorbat-60 darstellt.

9. Essbare Emulsion nach irgendeinem der Ansprüche 1 bis 8, die ferner von 0,1 bis 1 Gew.-% Lecithin umfasst, das einen HLB von 2 bis 6 und bevorzugt einen HLB von 3 bis 5 aufweist.

10. Essbare Emulsion nach irgendeinem der Ansprüche 1 bis 9, wobei die Emulsion eine bei 5 Grad Celsius mit einem Brookfield-Viskosimeter vom Typ DV-Pro, geliefert von Brookfield, betrieben bei 100 U/min unter Verwendung einer Spindel vom Typ 4, gemessene Viskosität von 300 bis 1800 mPa.s, bevorzugter von 500 bis 1700 mPa.s und sogar bevorzugter von 700 bis 1500 mPa.s, aufweist.

11. Verfahren zur Herstellung der essbaren gießfähigen Öl-in-Wasser-Emulsion nach irgendeinem der Ansprüche 1 bis 10, umfassend die Schritte:
a) Bereitstellen einer Wasser-Phase,
b) Bereitstellen einer Öl-Phase,
c) Mischen der Wasser-Phase und der Öl-Phase, um die essbare gießfähige Öl-in-Wasser-Emulsion bereitzustellen,
wobei die übrigen Bestandteile in irgendeinem der Schritte a), b) oder c) oder in Teilen irgendeiner Kombination dieser Schritte zugegeben werden.

12. Verfahren nach Anspruch 11, wobei die pflanzlichen Sterolester und die optional vorliegenden freien Sterole durch Lösen in einem Teil des flüssigen Öls bereitgestellt werden und nachfolgend in irgendeinem der Schritte a), b) oder c) oder in Teilen irgendeiner Kombination dieser Schritte zugegeben werden.

13. Verfahren nach Anspruch 11 oder Anspruch 12, wobei die dispergierte Öl-Phase einen Volumen-gewichteten geometrischen Durchschnittsdurchmesser D4,3 von höchstens 50 Mikrometer, bevorzugt von höchstens 25 Mikrometer und bevorzugter von 10 bis 22 Mikrometer hat.

14. Verwendung von pflanzlichen Sterolestern in einer gießfähigen Öl-in-Wasser-Emulsion zur Verminderung der Viskosität, zum Verbessern des Schaumbildungsverhaltens, bevorzugt während des Bratens, oder für eine Kombination davon.

15. Verwendung nach Anspruch 14, wobei sich die Verwendung zum Verbessern des Schaumbildungsverhaltens auf das Anheben der Menge des Schaums während des Bratens, Verlängern der Zeit, während der eine Schaumschicht beim Braten aufrechterhalten wird, oder auf eine Kombination davon bezieht.

## Revendications

1. Emulsion huile-dans-eau apte à être versée comestible pour friture courte comprenant :
• 40 à 90 % en masse d'huile liquide ;
• 5 à 55 % en masse d'eau ;
• 1 à 20 % en masse d'esters de stérols végétaux ;
• 0,05 à 5 % en masse de sel ;
• 0,01 à 3 % en masse d'émulsionnant de promotion huile-dans-eau.

2. Emulsion comestible selon la revendication 1, comprenant de 5 à 18 % en masse, de préférence de 9 à 16 % en masse et encore mieux de 10 à 14 % en masse d'esters de stérols végétaux.

3. Emulsion comestible selon la revendication 1 ou la revendication 2, comprenant de 1 à 15 % en masse, de préférence de 3 à 10 % en masse et encore mieux de 5 à 9 % en masse de stérols végétaux libres, rapportés à la masse totale d'esters de stérols végétaux et de stérols libres.

4. Emulsion comestible selon l'une quelconque des revendications 1 à 3, comprenant de 50 à 85 % en masse et de préférence de 65 à 80 % en masse d'huile liquide.

5. Emulsion comestible selon l'une quelconque des revendications 1 à 4, comprenant de 10 à 40 % en masse et de préférence de 15 à 30 % en masse d'eau.

6. Emulsion comestible selon l'une quelconque des revendications 1 à 5, comprenant de 0,1 à 4 % en masse, de préférence de 0,2 à 3 % en masse, encore mieux de 0,3 à 2 % en masse et bien mieux encore de 0,4 à 1,5 % en masse de sel.

7. Emulsion comestible selon l'une quelconque des revendications 1 à 6, comprenant de 0,05 à 2 % en masse, de préférence de 0,1 à 1,5 % en masse et encore mieux de 0,1 à 1,0 % en masse d'émulsionnant de promotion huile-dans-eau.

8. Emulsion comestible selon l'une quelconque des revendications 1 à 7, dans laquelle l'émulsionnant de promotion huile-dans-eau comprend du polysorbate-60 et est de préférence essentiellement du polysorbate-60.

9. Emulsion comestible selon l'une quelconque des revendications 1 à 8, comprenant de plus de 0,1 à 1 % en masse de lécithine ayant un HLB de 2 à 6 et ayant de préférence un HLB de 3 à 5.

10. Emulsion comestible selon l'une quelconque des revendications 1 à 9, dans laquelle l'émulsion présente une viscosité comme mesurée à 5 degrés Celsius avec un viscosimètre Brookfield Type DV-Pro fourni par Brookfield fonctionnant à 100 tr/min, en utilisant une broche de type 4, de 300 à 1 800 mPa.s, encore mieux de 500 à 1 700 mPa.s et bien mieux encore de 700 à 1 500 mPa.s.

11. Procédé de fabrication de l'émulsion huile-dans-eau apte à être versée comestible selon l'une quelconque des revendications 1 à 10, comprenant les étapes :
a) de fourniture d'une phase d'eau ;
b) de fourniture d'une phase d'huile ;
c) de mélange de la phase d'eau et de la phase d'huile pour fournir l'émulsion huile-dans-eau apte à être versée comestible,
dans lequel les ingrédients restants sont ajoutés dans l'une quelconque de l'étape a), b) ou c) ; ou en parties dans une combinaison quelconque desdites étapes.

12. Procédé selon la revendication 11, dans lequel les esters de stérols végétaux et les esters libres facultativement présents sont préparés pas dissolution en partie de l'huile liquide et sont ensuite ajoutés dans l'une quelconque des étapes a), b) ou c) ; ou en parties dans une combinaison quelconque desdites étapes.

13. Procédé selon la revendication 11 ou la revendication 12, dans lequel la phase d'huile dispersée présente un diamètre moyen géométrique pondéré en volume D4,3 d'au plus 50 micromètres, de préférence d'au plus 25 et encore mieux de 10 à 22.

14. Utilisation d'esters de stérols végétaux dans une émulsion huile-dans-eau apte à être versée pour réduire la viscosité ; pour améliorer le comportement de formation de mousse, de préférence pendant une friture ou une combinaison de ceux-ci.

15. Utilisation selon la revendication 14, dans laquelle l'utilisation pour améliorer le comportement de formation de mousse concerne l'augmentation de la quantité de mousse pendant la friture, l'augmentation de la durée pendant laquelle une couche de mousse est maintenue pendant la friture ou une combinaison de ceux-ci.
